# NEW EUROPEAN PATENT SPECIFICATION

(11) **EP 2 043 474 B2**
(45) Date of publication and mention of the opposition decision: **12.06.2019**
(45) Mention of the grant of the patent: 11.01.2012
(21) Application number: 07734693.0
(22) Date of filing: 21.05.2007
(51) Int. Cl.: A43D 25/18, B32B 37/26

(54) **MACHINE AND RELATIVE METHOD FOR APPLYING AN ADHESIVE LAYER TO A SURFACE OF AN OBJECT, SUCH AS AN INNER SOLE OF A SHOE**
MASCHINE UND ENTSPRECHENDES VERFAHREN ZUM AUFBRINGEN EINER KLEBESCHICHT AUF EINE FLÄCHE EINES GEGENSTANDS WIE EINER INNENSOHLE EINES SCHUHS
MACHINE ET PROCÉDÉ ASSOCIÉ D'APPLICATION D'UNE COUCHE D'ADHÉSIF SUR UN OBJET TEL QUE LA SEMELLE INTÉRIEURE D'UNE CHAUSSURE

(30) Priority: 30.06.2006 IT UD20060170
(43) Date of publication of application: 08.04.2009
(60) Divisional application: 11164862.2
(73) Proprietor: ALC Tecnologie Adesive S.r.l., Robassomero (TO) (IT)
(72) Inventor: CARRARO, Angelo Lorenzo, 10051 Avigliana (IT)
(74) Representative: Bergadano, Mirko
(86) International application number: PCT/IB2007/001394
(87) International publication number: WO 2008/004042

(56) References cited:
- EP-A- 0 979 729
- DE-A1- 2 110 092
- FR-A- 1 474 627
- GB-A- 1 352 187
- JP-A- S4 025 584
- US-A- 2 263 131
- US-A- 3 415 705
- US-A- 3 415 706

## Description

### TECHNICAL FIELD

The present invention relates to a method for applying an adhesive layer to a surface of an object, such as an inner sole of a shoe, to obtain an object having at least one adhesive surface ready for gluing to another object, such as a shoe, with no further finishing operations required.

### BACKGROUND ART

On shoe manufacturing machines, a layer of adhesive is applied to an inner sole, to be glued to the inside of a shoe, by spraying or brushing on the adhesive in liquid form, i.e. dispersed or mixed in a liquid, e.g. solvent, such as alcohols, ethers, ketones, or hydrocarbons. One adhesive used, for example, is a solvent polychloroprene adhesive, which is brushed onto both the inner sole and the inside of the shoe. Once the solvent evaporates, i.e. once the adhesive dries, the inner sole and shoe are glued to each other.

Solvents are potentially toxic, however, and so require the use of suction hoods, which are expensive and complicated to install and maintain.

Using solvent on the inner sole, some often remains in the inner sole, even when the shoe is finished, and may result in irritation or allergy to the sole of the foot of the wearer.

Known adhesive application methods also involve numerous operations, many of which are performed manually, while others, such as drying the solvent, take a long time to complete, thus reducing the output of the shoe production line.

FR-A-1,474,627 teaches to cover an inner sole of a shoe with an adhesive layer.

DE2110092 discloses a method for the manufacture of labels, with an apparatus comprising a first roll for a carrier strip having a layer of a thermoplastic adhesive on a first side thereof, and a second roll for a transfer strip to which the thermoplastic adhesive will more readily adhere than to the first side of the carrier strip. A plurality of labels placed between the juxtaposed strips. A heated shoe and a roller are provided for applying heat and pressure, so that the juxtaposed strips with the interposed labels are pressed together to form a temporary laminate and the temperature of the adhesive is brought to its adhering temperature. The thermoplastic adhesive of the carrier firmly adheres to the label. The excess portion of the thermoplastic adhesive on the carrier strip, not covered by the label, adheres to the transfer strip.

### DISCLOSURE OF INVENTION

It is an object of the present invention to provide a method, of applying an adhesive layer to a surface of an object, which is efficient and fast, provides for high output, and ensures a high degree of operator safety.

To eliminate the drawbacks of the known art, and to achieve these and other objects and advantages, the Applicant has researched, tested, and implemented the present invention.

The present invention is defined and characterized in the independent Claim 1.

The dependent Claims disclose other characteristics of the present invention or variations of the basic concept.

A machine can be used to apply an adhesive layer to an object having at least a first and second flat surface opposite each other. The object, for example, may be flat, such as an inner sole of a shoe, a badge, decoration, sign, article of clothing, or a furnishing item, or a nonflat, thick and/or complex-shaped object.

Accordingly, the machine comprises first feed means for feeding a first tape - on one face of which said adhesive layer is applied - so that a first part of the adhesive layer contacts said first surface of the object.

The machine also comprises second feed means for feeding a second tape - on one face of which is applied a cover layer - to cover the whole of the object to be applied with the adhesive layer, so that a first portion of the cover layer contacts a second part of the adhesive layer surrounding the object, and a second portion of the cover layer contacts a second surface of the object opposite said first surface.

The first feed means and second feed means cooperate with each other to press said first part of the adhesive layer on the first surface, so that they adhere to each other, and to press said first portion of the cover layer on the second part of the adhesive layer, so that they adhere to each other.

The machine also comprises a peeling unit for peeling the cover layer off the object to detach the second part of the adhesive layer from the object.

The machine as such is efficient, automatic, and fast, and performs a small number of operations to apply an adhesive layer to an object, with no additional finishing or surplus adhesive removing operations required.

Moreover, the machine advantageously provides for a high degree of operator safety, by greatly reducing the number of repetitive manual operations typical of the known art.

Moreover, the adhesive layer is advantageously of solid adhesive, thus eliminating the need for fume and/or solvent suction hoods, reducing manufacturing cost, and safeguarding the health of the operators.

According to the present invention, there is provided a method of applying the adhesive layer to the first surface of the object, as defined in claim 1.

The object with the adhesive layer applied is thus obtained with no additional finishing or surplus adhesive removing operations required.

The method according to the present invention has the advantage of being efficient and fast, of providing for high output, and of ensuring a high degree of operator safety.

The object, such as an inner sole, is advantageously glued more firmly, and is resistant to both long-term use and temperature.

In the case of the inner sole applied with adhesive according to the invention, grip to the shoe is longer-lasting and resistant to withdrawal of the foot from the shoe.

Moreover, the object applied with adhesive is of superior finish quality, and undergoes no discolouration or staining caused by the use of solvent.

In other words, the method according to the invention advantageously punch-cut the adhesive layer by removing the cover layer, which, in predetermined manner and accurately following the outer edge of the object, also takes with it the adhesive layer surrounding the object. The outer edge of the object, in fact, acts as a cutting edge for the adhesive layer, with no need for cutting dies shaped to match the object. Part of the adhesive layer remains evenly attached to the first surface of the object, and constitutes the adhesive layer by which to glue the object, while the part of the adhesive layer surrounding the object is removed selectively by the cover layer. As compared with conventional punch-cutting, the invention also has the advantage of not having to stop the production cycle and reset the machine alongside changes in the cutting edge, i.e. the type of object, on account of the machine adapting automatically to such changes, thus eliminating the downtime associated with the above operations. In the case in question, this is advantageous in the event of changes to the type and/or size of the inner sole to be applied with adhesive. Using the method according to the invention, inner soles of any type can thus be applied with adhesive continuously, for mass-production insertion inside the shoes.

### BRIEF DESCRIPTION OF THE DRAWINGS

A preferred, non-limiting embodiment of the present invention will be described by way of example with reference to the accompanying drawings, in which:
Figure 1 shows a three-dimensional view of a machine for applying an adhesive layer to a surface of an object;
Figure 2 shows a schematic side view of the Figure 1 machine;
Figure 3 shows, schematically, one step of a method, in accordance with the present invention, for applying an adhesive layer to a surface of an object;
Figure 4 shows, schematically, a further step in the method according to the present invention;
Figure 5 shows a schematic plan view of a further step in the method according to the present invention.

### PREFERRED EMBODIMENT OF THE INVENTION

With reference to the accompanying drawings, a machine 10 is shown for applying an adhesive layer 12 to a first surface 24 of an object 22.

The term adhesive layer 12 is intended to mean both an adhesive film, typically flat and of constant and/or even thickness, and an adhesive layer of varying and/or uneven thickness, as, for example, when applied manually.

Object 22 may be substantially flat, i.e. of small thickness.

Alternatively, object 22 may be nonflat and thick and/or of complex shape, i.e. may be decidedly three-dimensional.

In the example shown, object 22 is an inner sole or so-called hygienic inner sole for a shoe, to which an adhesive layer 12 is applied to glue it to the inside of the shoe. In the example shown, the inner sole has a maximum length of approximately 40 to 50 cm, and a maximum width of approximately 10 to 20 cm.

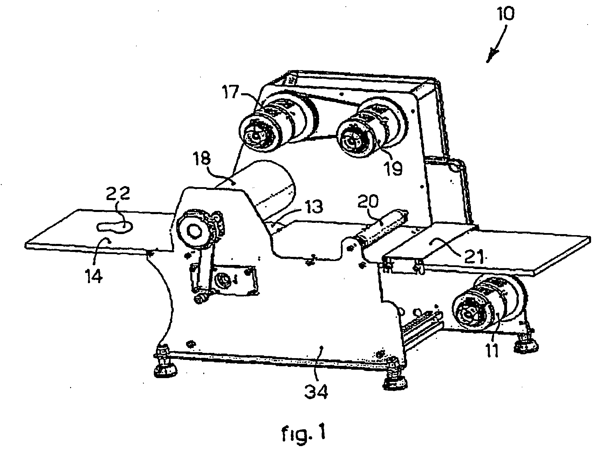

Object 22 is positioned, either manually or by automatic loaders, on a supporting surface 14 - in the example shown, horizontal - supported by a frame 34 (Figure 1).

Adhesive layer 12 advantageously comprises solid adhesive.

In one solution, the solid adhesive is a solid polymer adhesive.

Advantageously, the solid adhesive is a solid polymer adhesive of superior elastic or elastoplastic properties, i.e. extensibility, flexibility, tensile and shear strength.

The solid adhesive is advantageously an acrylic adhesive, such as, but not exclusively, an adhesive comprising acrylic acid, methacrylic acid, acrylic ester, methacrylic ester, hydroxyalkylacrylate, hydroxyalkylmethacrylate, or mixtures of these, and/or copolymers of vinylpyrrolidone or vinyl alcohol and acrylic acid or methacrylic acid.

Alternatively, the adhesive may be "hot-melt" or "gum resin" adhesive.

In one embodiment, the first tape 30, comprising adhesive layer 12, is a transfer film, with non-supported acrylic adhesive, of high resistance to temperature and ageing.

Machine 10 comprises first feed means 11, 13 for supplying a first tape 30, and second feed means 17, 18 for supplying a second tape 32, which are fitted in rotary manner to frame 34.

First tape 30 comprises adhesive layer 12, which is applied, e.g. coated, onto and supported by a supporting layer or "liner" 15. In other words, first tape 30 is a biadhesive member, in which a first adhesive surface is protected by supporting layer 15, and a second adhesive surface is available for gluing.

In the example shown, adhesive layer 12 is about 0.05 to 20 mm, and advantageously about 0.8 to 0.12 mm, thick, and supporting layer 15 is about 0.05 to 0.09 mm thick.

In the example shown, first tape 30 and second tape 32 are of 50 metres minimum length, and 50 cm minimum width.

Second tape 32, on the other hand, comprises a cover layer 16 made, for example, of silicone paper, and having a controlled or so-called removable adhesive, which sticks in predetermined selective manner to ensure a given grip to the adhesive layer, and to adhere less or not at all to first surface 24 of object 22.

For example, second tape 32 is a so-called masking tape, but with removable adhesive, so that cover layer 16 leaves no residual adhesive once it is removed.

In the example shown, cover layer 16 is about 0.05 to 0.09 mm thick.

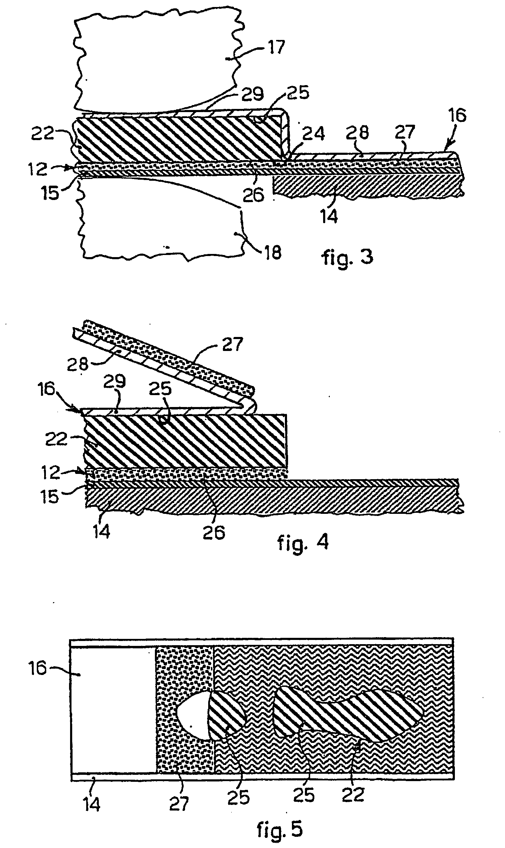

In one embodiment of the invention, adhesive layer 12 adheres more strongly to cover layer 16 than to supporting layer 15, so that, when supporting layer 15 is applied to adhesive layer 12, and cover layer 16 is applied to adhesive layer 12, removal of cover layer 16 from adhesive layer 12 detaches adhesive layer 12 completely from supporting layer 15, and transfers adhesive layer 12 to cover layer 16 (Figure 5).

First feed means 11, 13 comprise a first reel-off roller 11 for feeding first tape 30 to a first pressure roller 13.

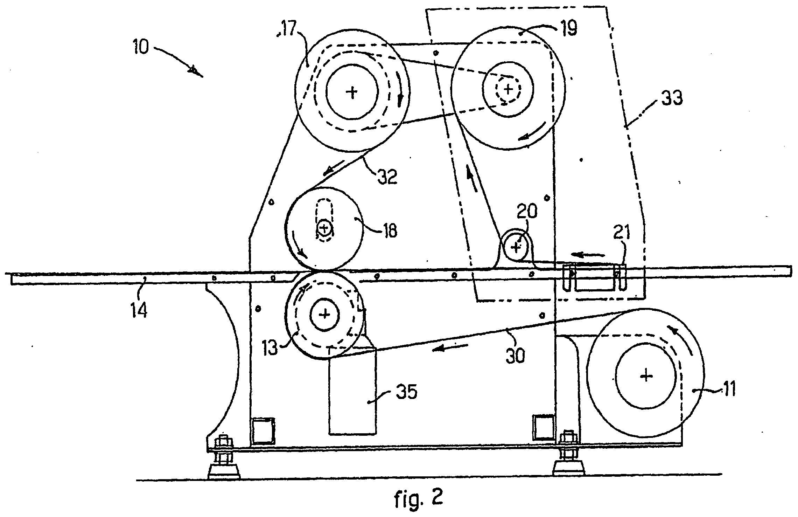

First pressure roller 13 is located substantially on a level with, or slightly below, supporting surface 14, and rotates about a respective axis of rotation to feed first tape 30 to supporting surface 14, and to bring a first part 26 of adhesive layer 12 into contact with first surface 24 (Figure 2). In the example shown, first tape 30 is fed as described above, with adhesive layer 12 facing upwards, and supporting layer 15 facing downwards (Figure 3).

Second feed means 17, 18 comprise a second reel-off roller 17 for feeding second tape 32 to a second pressure roller 18.

Second pressure roller 18 is located substantially on a level with, or slightly above, supporting surface 14, is advantageously aligned with first pressure roller 13, and rotates about a respective axis of rotation, parallel to the axis of rotation of first pressure roller 13, to feed second tape 32.

Object 22 is inserted in steps between first pressure roller 13 and second pressure roller 18, which advantageously rotate synchronously to feed object 22 effectively between the rollers.

First pressure roller 13 may be driven by a motor 35 (Figure 2) to rotate first reel-off roller 11 and, optionally, second pressure roller 18.

Alternatively, first pressure roller 13 and second pressure roller 18 are idle and rotated by first reel-off roller 11 and second reel-off roller 17 respectively.

Second tape 32 is thus applied to object 22 - in the example shown, to a second surface 25 opposite first surface 24 - to cover object 22 completely.

More specifically, second pressure roller 18 brings a first portion 28 of cover layer 16 into contact with a second part 27 of adhesive layer 12 - i.e. the part surrounding object 22, when object 22 is positioned on first tape 30 - and brings a second portion 29 of cover layer 16 into contact with said second surface 25 (Figure 3).

This is made possible by virtue of the length and width of first and second tapes 30 and 32, as stated, being greater than those of object 22 (Figure 5).

First pressure roller 13 and the second pressure roller cooperate with each other to press first part 26 on first surface 24, so that they adhere to each other, and to press first portion 28 on second part 27, so that they too adhere to each other.

First pressure roller 13 and second pressure roller 18 are positioned substantially contacting, e.g. in sliding contact, to press first tape 30 on first surface 24 of object 22, and second tape 32 on second surface 25 of object 22.

For this reason, at least part, e.g. the lateral surface, of first pressure roller 13 and second pressure roller 18 is made of deformable material.

By deformable material is meant a material which deforms under pressure and returns to its original shape once pressure is released, that is, a material of superior elastic and/or elastoplastic properties, i.e. extensibility, flexibility, tensile and shear strength, such as an elastic and/or elastoplastic polymer, such as silicone, or silicone rubber, e.g. methyl vinyl silicone, of 25 to 70 Shore A hardness.

In one embodiment of the invention, silicone of 30 Shore A hardness is used.

In one embodiment of the invention, first pressure roller 13 and second pressure roller 18 have a brushlike lateral surface defined by more or less elastic bristles of predetermined hardness, which adapt effectively to the shape of a thick and/or irregular-, complex-shaped, i.e. nonflat, object 22.

Despite the reaction force of object 22 compressed between first tape 30 and second tape 32, first and second pressure rollers 13, 18, being deformable, advantageously exert uniform pressure on second tape 32 to stick it correctly to second surface 25 and effectively to second portion 27 of adhesive layer 12 surrounding object 22, and to press and stick first portion 26 of adhesive layer 12 correctly onto first surface 24, so that, despite the difference in height between second surface 25 and adhesive layer 12, cover layer 16 adheres evenly to both object 22 and to adhesive layer 12 exceeding the outer edge of object 22, i.e. second part 27 of adhesive layer 12.

Given the structural, elastic and/or elastoplastic characteristics of adhesive layer 12, this can advantageously be detached completely from supporting layer 15, along the outer edge of object 22 which acts as a cutting edge, even if cover layer 16 does not adhere completely to second part 27, i.e. even if there are areas of second part 27, e.g. extending about 0 to 1 mm beyond the outer edge of object 22, to which cover layer 16 does not adhere.

The distance or gap between first and second pressure roller 13, 18, and the material from which they are made, are obviously selected according to the type, shape, and material of object 22.

In one variation, the lateral surface of first pressure roller 13 and second pressure roller 18 is knurled to improve the pressure exerted on object 22.

In another variation, first and second pressure roller 13, 18 are movable towards each other to exert pressure on object 22.

Machine 10 also comprises a peeling unit 33 for engaging second tape 32, in particular cover layer 16, and removing it from object 22.

By virtue of the adhesive characteristics of adhesive layer 12 described above, second part 27 of adhesive layer 12 is thus detached from object 22 (Figure 4).

Peeling unit 33 is located downstream from first and second pressure roller 13, 18 (Figure 2).

Handling between peeling unit 33 and the first and second pressure roller is made possible by peeling unit 33 substantially drawing second tape 32 - which is integral with adhesive layer 12, in turn integral with object 22 and supporting layer 15 - in a direction substantially parallel to and lengthwise of supporting surface 14.

In one embodiment of the invention, peeling unit 33 comprises a take-up roller 19 for rewinding second tape 32, to the cover layer 16 of which the peeled off adhesive layer 12 adheres.

Peeling unit 33 also comprises a plate 21, which is substantially parallel to and located a given height off supporting surface 14, and cooperates with second tape 32 to detach it from object 22. In the example shown, plate 21 diverts and folds second tape 32 roughly 180° in the opposite direction to the travelling direction of object 22.

A guide roller 20 is located between plate 21 and take-up roller 19 to recover second tape 32 from plate 22 and feed it back to take-up roller 19.

Take-up roller 19 and second reel-off roller 17 are advantageously powered by one motor (not shown), and connected by common drive means, such as belts or chains, to rotate synchronously.

In the example shown, take-up roller 19 is driven, and in turn drives second tape 32 and, therefore, also second reel-off roller 17.

Finally, object 22 is detached easily from supporting layer 15, which, as stated, adheres less strongly to adhesive layer 12 than adhesive layer 12 to first surface 24 of object 22.

Object 22 applied with adhesive can be glued easily to another object, e.g. in the case of an inner sole, this is inserted into and glued to the inside of a shoe. In the case of a high-heeled shoe, or at any rate a closed shoe and/or a shoe with a steeply sloping foot supporting surface, adhesive layer 12 of inner sole 22 may be wetted, e.g. with water or other liquid, to slide the adhesive inner sole 22 in smoothly to glue it evenly and effectively to the shoe.

Clearly, to the method for applying an adhesive layer to a surface of an object, as described herein, changes may be made without departing from the scope of the present invention, which is defined by the appended claims.

For example, a draw unit can be located downstream from peeling unit 33, i.e. downstream from plate 21, and substantially comprising two rotating rollers arranged in the same way as pressure rollers 13, 18, and which are driven by a motor to draw supporting layer 15 - to which object 22 is still attached by adhesive layer 12 - so that it is held taut, with no creasing or folds which could hinder or slow down throughput.

## Claims

1. A method for applying an adhesive layer (12) to a first surface (24) of an object (22) having a second surface (25) opposite said first surface (24), comprising the steps of:
- supplying a first tape (30), having said adhesive layer (12) on one face, so that a first part (26) of said adhesive layer (12) contacts said first surface (24) of said object (22);
- supplying a second tape (32), having a cover layer (16) on one face, to completely cover said object (22) so that a first portion (28) of said cover layer (16) contacts a second portion (27) of said adhesive layer (12) surrounding said object (22), and a second portion (29) of said cover layer (16) contacts said second surface (25) of the object (22); said supplying steps being carried out respectively by means of first feed means (11, 13) and second feed means (17, 18), which cooperate with each other to press said first part (26) of said adhesive layer (12) on said first surface (24) of the object (22), so that they adhere to each other, and to press said first portion (28) of said cover layer (16) on said second part (27) of said adhesive layer (12), so that they adhere to each other;
- removing said cover layer (16) from said object (22) to detach said second part (27) of said adhesive layer (12) from said object (22) by means of a peeling unit (33) ;
said first feed means (11, 13) comprising a first reel-off roller (11) and a first pressure roller (13), said first reel-off roller (11) feeding said first tape (30) to said first pressure roller (13); said second feed means (17, 18) comprising a second reel-off roller (17) and a second pressure roller (18), said second reel-off roller (17) feeding said second tape (32) to said second pressure roller (18);
said first pressure roller (13) and said second pressure roller (18) rotating about respective axes;
**characterized in that** said first pressure roller (13) and said second pressure roller (18) are positioned substantially contacting to press said first tape (30) on said first surface (24) of said object (22), and said second tape (32) on said second surface (25) of said object (22) and to press said first portion (28) of said cover layer (16) on said second part (27) of said adhesive layer (12).

2. A method as claimed in Claim 1, **characterized in that** said adhesive layer (12) comprises a solid adhesive.

3. A method as claimed in any one of the foregoing Claims, **characterized in that** said first tape (30) comprises a supporting layer (15) supporting said adhesive layer (12).

4. A method as claimed in Claim 3, **characterized in that** said cover layer (16) adheres more firmly to said adhesive layer (12) than said supporting layer (15) to said adhesive layer (12).

5. A method as claimed in Claim 1, **characterized in that** said first pressure roller (13) and said second pressure roller (18) are made at least partly of substantially deformable material.

## Patentansprüche

1. Verfahren zum Aufbringen einer Haftschicht (12) auf eine erste Oberfläche (24) eines Gegenstands (22), der eine zweite Oberfläche (25), die der ersten Oberfläche (24) gegenüberliegt, aufweist, umfassend die Schritte:
- Zuführen eines ersten Bands (30), das an einer Seite die erste Haftschicht aufweist, derart, dass ein erster Teil (26) der Haftschicht (12) die erste Oberfläche (24) des Gegenstands (22) kontaktiert;
- Zuführen eins zweiten Bands (32), das an einer Seite eine Deckschicht (16) aufweist, um den Gegenstand (22) vollständig abzudecken, derart, dass ein erster Abschnitt (28) der Deckschicht (16) einen zweiten Abschnitt (27) der Haftschicht (12), die den Gegenstand (22) umgibt, kontaktiert und ein zweiter Abschnitt (29) der Deckschicht (16) die zweite Oberfläche (25) des Gegenstands (22) kontaktiert; wobei die Zuführschritte jeweils durchgeführt werden mittels erster Zuführmittel (11, 13) und zweiter Zuführmittel (17, 18), die zusammenwirken, um den ersten Teil (26) der Haftschicht (12) an die erste Oberfläche (24) des Gegenstands (22) zu drücken, so dass sie aneinander haften, und den ersten Abschnitt (28) der Deckschicht (16) an den zweiten Teil (27) der Haftschicht (12) zu drücken, so dass sie aneinander haften;
- Entfernen der Deckschicht (16) von dem Gegenstand (22), um den zweiten Teil (27) der Haftschicht (12) von dem Gegenstand (22) mittels einer Schäleinheit (33) zu lösen;
wobei die ersten Zuführmittel (11, 13) eine erste Abwickelrolle (11) und eine erste Andruckrolle (13) umfassen, wobei die erste Abwickelrolle (11) das erste Band (30) der ersten Andruckrolle (13) zuführt; und wobei die zweiten Zuführmittel (17, 18) eine zweite Abwickelrolle (17) und eine zweite Andruckrolle (18) umfassen, wobei die zweite Abwickelrolle (17) das zweite Band (32) der zweiten Andruckrolle (18) zuführt;
wobei sich die erste Andruckrolle (13) und die zweite Andruckrolle (18) um jeweilige Achsen drehen; **dadurch gekennzeichnet, dass** die erste Andruckrolle (13) und die zweite Andruckrolle (18) im Wesentlichen in gegenseitigem Kontakt positioniert sind, um das erste Band (30) an die erste Oberfläche (24) des Gegenstands (22) und das zweite Band (32) an die zweite Oberfläche (25) des Gegenstands (22) zu drücken und den ersten Abschnitt (28) der Deckschicht (16) an den zweiten Abschnitt (27) der Haftschicht (12) zu drücken.

2. Verfahren nach Anspruch 1, **dadurch gekennzeichnet, dass** die Haftschicht (12) ein festes Haftmittel umfasst.

3. Verfahren nach einem der vorhergehenden Ansprüche, **dadurch gekennzeichnet, dass** das erste Band (30) eine Stützschicht (15) umfasst, die die Haftschicht (12) unterstützt.

4. Verfahren nach Anspruch 3, **dadurch gekennzeichnet, dass** die Deckschicht (16) fester an der Haftschicht (12) haftet als die Stützschicht (15) an der Haftschicht (12).

5. Verfahren nach Anspruch 1, **dadurch gekennzeichnet, dass** die erste Andruckrolle (13) und die zweite Andruckrolle (18) wenigstens teilweise aus einem im wesentlichen verformbaren Material gefertigt sind.

## Revendications

1. Procédé d'application d'une couche d'adhésif (12) sur une première surface (24) d'un objet (22) présentant une deuxième surface (25) opposée à ladite première surface (24), comprenant les étapes consistant à :
- approvisionner une première bande (30) comprenant ladite couche d'adhésif (12) sur l'une des faces, de sorte qu'une première partie (26) de ladite couche d'adhésif (12) touche ladite première surface (24) dudit objet (22);
- approvisionner une deuxième bande (32) comprenant une couche de couverture (16) sur l'une des faces, pour couvrir complètement ledit objet (22), de sorte qu'une première partie (28) de ladite couche de couverture (16) touche une deuxième partie (27) de ladite couche d'adhésif (12) entourant ledit objet (22), et une deuxième partie (29) de ladite couche de couverture (16) touche ladite deuxième surface (25) de l'objet (22);
lesdites étapes d'approvisionnement étant effectuées respectivement par des premiers moyens d'alimentation (11,13) et des seconds moyens d'alimentation (17,18), coopérant l'un avec l'autre pour presser ladite première partie (26) de ladite couche d'adhésif (12) sur ladite première surface (24) de l'objet (22), de sorte qu'elles adhèrent l'une à l'autre, et pour presser ladite première partie (28) de ladite couche de couverture (16) sur ladite deuxième partie (27) de ladite couche d'adhésif (12) de sorte qu'elles adhèrent l'une sur l'autre :
- retirer ladite couche de couverture (16) dudit objet (22) pour détacher ladite deuxième partie (27) de ladite couche d'adhésif (12) dudit objet (22) à l'aide d'une unité de pelage (33) ;
lesdits premiers moyens d'alimentation (11,13) comprenant un premier rouleau dérouleur (11) et un premier rouleau presseur (13), ledit premier rouleau dérouleur (11) amenant ladite première bande (30) au dit premier rouleau presseur (13) ; lesdits deuxièmes moyens d'alimentation (17,18) comprenant un deuxième rouleau dérouleur (17) et un deuxième rouleau presseur (18), ledit deuxième rouleau dérouleur (17) amenant ladite deuxième bande (32) au dit deuxième rouleau presseur (18) ;
ledit premier rouleau presseur (13) et ledit deuxième rouleau presseur (18) tournant autour de leurs axes respectifs ; **caractérisé en ce que** ledit premier rouleau presseur (13) et ledit deuxième rouleau presseur (18) sont positionnés sensiblement en contact pour presser ladite première bande (30) sur ladite première surface (24) dudit objet (22), et ladite deuxième bande (32) sur ladite deuxième surface (25) dudit objet (22), et pour presser ladite première partie (28) de ladite couche de couverture (16) sur ladite deuxième partie (27) de ladite bande adhésive (12).

2. Procédé selon la revendication 1, **caractérisé en ce que** ladite couche d'adhésif (12) comprend un adhésif solide.

3. Procédé selon l'une quelconque des revendications précédentes, **caractérisé en ce que** ladite première bande (30) comprend une couche support (15) portant ladite couche d'adhésif (12).

4. Procédé selon la revendication 3, **caractérisé en ce que** ladite couche de couverture (16) adhère plus fermement à ladite couche d'adhésif (12) que ladite couche support (15) à ladite couche d'adhésif (12).

5. Procédé selon la revendication 1, **caractérisé en ce que** ledit premier rouleau presseur (13) et ledit deuxième rouleau presseur (18) sont réalisés au moins en partie en matériau sensiblement déformable.
